# EUROPEAN PATENT SPECIFICATION

(11) **EP 0 485 884 B1**
(45) Date of publication and mention of the grant of the patent: **17.05.1995**
(21) Application number: 91118960.3
(22) Date of filing: 07.11.1991
(51) Int. Cl.: B60C 11/12, B60C 11/11

(54) **Sipes for tire treads**
Feineinschnitte für Reifenlauffläche
Incisions pour bande de roulement de pneumatique

(30) Priority: 14.11.1990 US 612953
(43) Date of publication of application: 20.05.1992
(73) Proprietor: THE GOODYEAR TIRE & RUBBER COMPANY, Akron, Ohio 44316-0001 (US)
(72) Inventor: Graas, Maurice, L-8558 Reichlange (LU)
(74) Representative: Leitz, Paul

(56) References cited:
- EP-A- 0 160 541
- EP-A- 0 330 644
- AU-B- 385 953
- DE-A- 3 738 159
- GUMMIBEREIFUNG, vol. 56, no. 10, October 1980, BIELEFELD, page 60 ; 'Nokia: Hakkapeliitta Nr. 09 - Ein Winterreifen der 80er Jahre'

## Description

The present invention relates to sipes for tire treads as well as to pneumatic tires including such a tread.

The tread portion of a pneumatic tire generally comprises a plurality of circumferentially and laterally extending grooves defining ground engaging elastomeric blocks. The particular size and shape of these elements contribute significantly to the overall performance of the tire.

Winter type tires -as well as all season type tires- usually have multiple sipes, a tire according to the preamble of claim 1 can for instance be seen on "Nokia, Hakkapeliitta nr 09 - ein Winterreifen der 80er Jahre; appearing on page 60 of GUMMIBEREIFUNG, vol.56, no. 10, Oktober 1980, Bielefeld.

The sipes may have a radial depth comparable to the radial depth of the grooves surrounding the respective blocks or a somewhat smaller radial depth. The depth may also be variable. The sipes increase the number of biting edges. The local high pressure at each biting edge improves the wiping and digging action of the tread surface, conferring to a tire excellent traction on snow and ice. The relative longitudinal sliding between the two opposite faces of a sipe however reduces the rigidity of the blocks and causes them to flex in the contact area between tread and ground. This flexing of the blocks leads to diminished handling performance on dry ground and to reduced braking performance on wet ground. Furthermore, the reduced stiffness resulting from the tread leads to a reduced resistance to wear.

The aim of the invention is to create a sipe layout for a winter type tire tread having good braking properties on wet surfaces and good traction properties on ice and snow covered roads.

A further aim of the invention is to provide a sipe layout for a tire tread showing a fair cornering performance and low tread wear.

There is provided in accordance with the present invention a winter type tire tread such as defined in appended claim 1.

Preferred embodiments of the invention are defined in the dependent claims.

To acquaint persons skilled in the art most closely related to the instant invention, certain preferred embodiments are now described with reference to the annexed drawings. These embodiments are illustrative and can be modified in numerous ways within the spirit and scope of the invention defined in the claims.

Figure 1 is a perspective view of a tire sketch embodying a single ground engaging elastomeric block made in accordance with the invention.

Figure 2-4 are schematic top or side views of the single ground engaging elastomeric block shown on figure 1.

Figure 5 shows a series of different block elements embodying the invention.

One important aspect of the invention consists in designing the orientation of the sipes so as to take advantage of the increased traction they provide on ice and snow and to reduce the negative effect they have on wet braking, cornering properties and tire wear. It is to be understood that the invention applies to new tires, to retreaded tires as well as to tire treads in strip form being at least partly vulcanized and having a pattern of grooves and raised elements integral therewith.

For the purpose of this invention, an equatorial plane is a plane perpendicular to a tire's axis of rotation and passing through the center of its tread, midway between the sidewalls of the tire. The terms "radial" and "radially" are understood to refer to directions that are perpendicular to the axis of rotation of a tire, the terms "axial" and "axially" are used herein to refer to lines or directions that are parallel to the axis of rotation of a tire and the terms "lateral" and "laterally" are understood to refer to directions going from one sidewall of a tire towards the other sidewall of a tire. "Groove" means an elongated void area in a tread that may extend circumferentially or laterally in the tread in a straight, curved or zig-zag manner. A "sipe" is a groove having a width in the range from about 0.2 % to 0.8 % of the tread width. Sipes are typically formed by steel blades having a thickness of about 0.5 mm, inserted into a cast or machined mold; inasmuch as sipes are so narrow, they are illustrated by single lines.

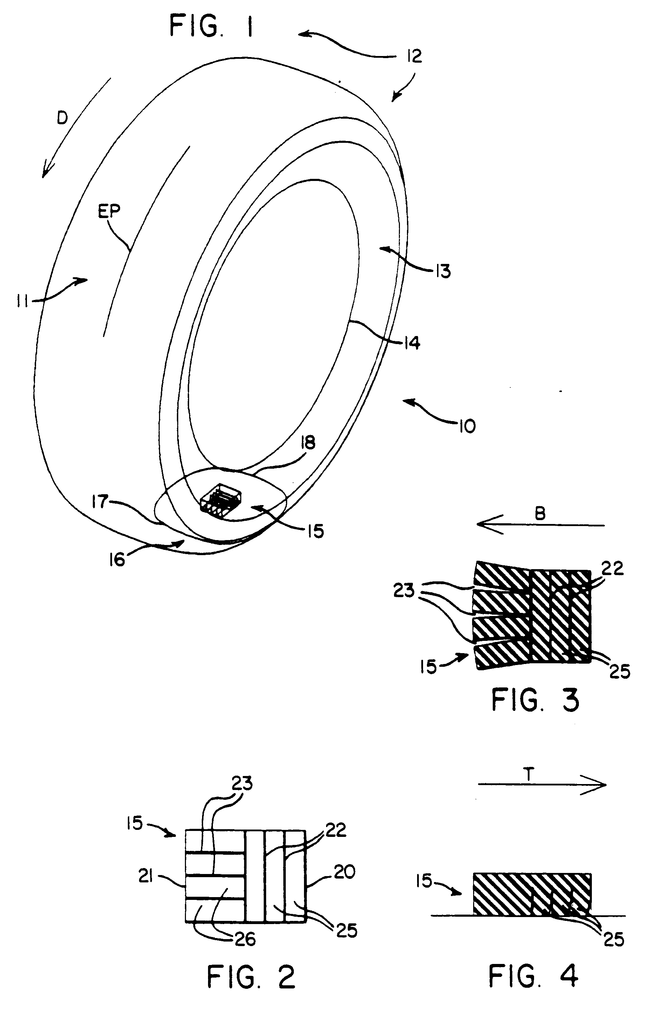

With reference to Figure 1 there is illustrated schematically a pneumatic tire 10 having a ground contacting tread 11. The tread is flanked by a pair of shoulders 12, which are in turn joined to a pair of sidewalls 13 that extend radially inwardly from the tread and each terminates in a bead 14. The direction of rotation of the tire is indicated by an arrow D. For clarity reasons, only one of the plurality of elastomeric blocks 15 situated at any moment in the footprint 16 of the tire 10 has been represented. By "footprint" is meant the contact patch or area of contact of the tire tread with a flat surface at zero speed and under normal load and pressure. The front edge 17 and the rear edge 18 of the footprint 16 are the boundary lines for the portions of the tire tread which are about to enter respectively to leave the tire footprint.

The principles underlying the layout of the sipes according to the invention can best be described by referring to Figure 2, where a top view of an enlarged elastomeric block 15 has been represented. The block enters the front edge of the footprint of the tire with a portion belonging to its side 20, called hereafter the front side, whereas the block 15 leaves the footprint through its rear edge belonging to the circumferentially opposite side 21, called hereafter the rear side of the block. The block 15 is provided with a plurality of sipes, a first series of sipes 22, substantially transverse to the direction of travel D of the tire, and a second series 23, substantially parallel thereto. The sipes 22 and 23 delimit segments 25, respectively 26 of elastomeric material. The thickness of such segments, measured transversely to the centerline of the segments, ranges usually between 3 and 6 mm.

Figure 3 shows the block 15 when submitted to a braking force B. The sipes 23, which are parallel to the direction of travel D of the tire, open up at the front side of the block, thereby increasing the block section perpendicular to the direction of travel of the tire; furthermore, the major portion of the radially outermost surface area of the segments 26 remains in contact with the road. A parallel orientation of the sipes relative to the direction of travel of the tire reduces also the circumferential stiffness of the rear side of the blocks, resulting in reduced and regular wear.

The sipes 22 which are perpendicular to the direction of the braking force, however, have a weakening effect on the braking potential of the tire tread: they favor a bending of the interposed segments 25 of rubber so that only the edges of these segments contact the road. These sipes leading to a disadvantage during the braking operations provide an advantage when traction on ice and snow covered roads is required. This can be seen on Figure 4, where the same block 15, submitted to a traction force T, has been represented. The bending of the rubber segments 25 increases the total length of biting edges contacting the road, which results in an increased circumferential wiping and digging action of the block. The sipes 23, parallel to the direction of travel of the tire, do not provide any extra traction.

In practice, the strictly transverse and parallel orientation of the first and second series of sipes with respect to the direction of travel can rarely be chosen as shown for explanatory purposes on Figures 2-4, but when deciding on the orientation of the sipes, the tire design engineer must take into account the layout of the grooves, the specific shape of the elastomeric blocks, the orientation of the front and rear sides of the blocks with respect to the equatorial plane of the tire, the wear characteristics of the tire tread, the physical characteristics of the elastomeric compound composing the tread etc..

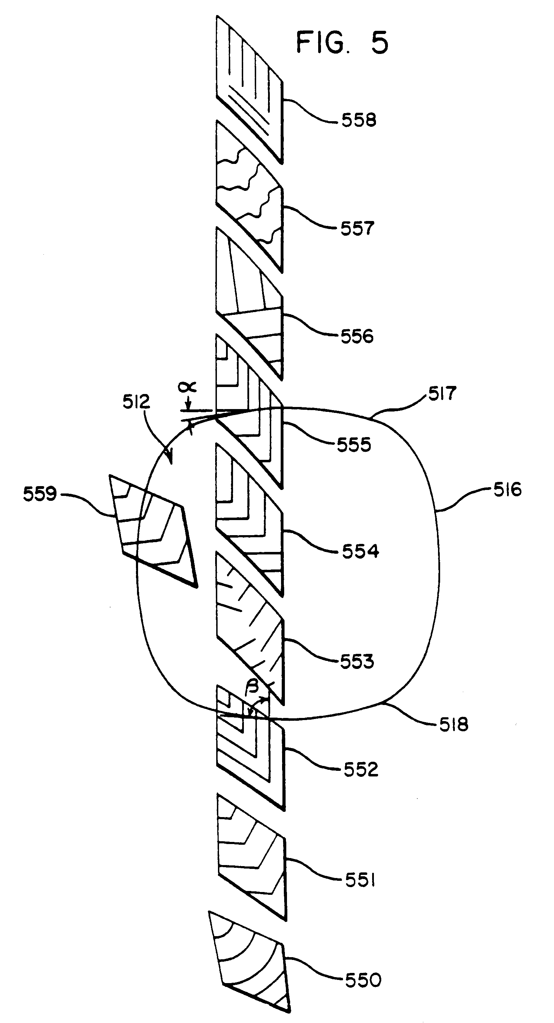

Several examples of elastomeric blocks incorporating sipes according to the invention are shown on Figure 5. The elastomeric blocks 550 to 559, belonging to different tread patterns but shown for ease of representation as entering the same footprint 516, are each provided with a plurality of sipes.

As used herein and in the claims, the "first series" of sipes is defined as the sipes comprised in the elastomeric block close to its front side. The "second series" of sipes is defined as being close to the rear side of the block. A sipe belonging to the first series of sipes is usually connected to a sipe belonging to the second series of sipes by a middle portion. The middle portion can be curved (see blocks 550, 559), wave shaped (see block 557) or angled (see blocks 551, 552, 554, 555). In accordance with the invention, the middle portion can also have a zig-zag shape or any other shape so as to tune the stiffness of the elastomeric blocks in the various directions to the required value. This must however not be interpreted that generally the number of sipes belonging to the first series have to be equal to the number of sipes belonging to the second series; some sipes may be connected by a middle portion whereas others are not.

The first and second series usually intersect one side of the elastomeric blocks (see blocks 550 to 555, 557, 559), being connected (see blocks 550 to 552, 554. 555, 557, 559) or not (see blocks 553, 556, 558 and block 15 of Fig. 2) by a middle portion. A plurality of sipes of the first or second series may intersect both sides (see block 556 and block 15 of Fig. 2) or neither side of the elastomeric blocks (see block 558). Alternatively a first series of parallel sipes near the front side of the blocks may have an angled relationship to a second series of parallel sipes situated near the rear side of the blocks without being interconnected by a middle portion (see block 556, 558 and block 15 of Fig. 2). The examples illustrated here are not to be considered in any way as being exhaustive.

According to the invention, the first series of sipes should form with the front edge 17 of the footprint 16, an angle α of at most 40° preferably of at most 20°, when entering the footprint. Due to the shape of the blocks and to stiffness considerations of the tread pattern, it may not be possible to confer to all the sipes of the first series of sipes the mentioned α angle value. In that case, at least 50% and preferably at least 70% of the sipes inserted in the different blocks should have the above angle value α to obtain the desired effect.

The second series of sipes should form with the rear edge 18 an angle β of at least 50° and preferably of at least 70° when leaving the footprint of the tire, in order to have the required wet braking properties and in order to reduce the circumferential stiffness of the elastomeric blocks so as to obtain reduced and regular wear.

It is further preferred that the second series of the sipes provided in blocks located in the shoulder 512 of the tire, should point towards the nearest shoulder edge (see block 559 on Figure 5) rather than towards the equatorial plane of the tire. Put in other words, the second series of sipes located in shoulder blocks should form with the equatorial plane an angle of at least 45° and preferably of at least 65°. It is believed that sipes having such an orientation with respect to the nearest shoulder edge confer to the tire an improved cornering performance. If, due to design constraints, it is not possible to give to all of the sipes of the second series the recommended orientation, at least 50% and preferably at least 70% of the second series of the sipes provided in blocks located in shoulder rows should have the recommended orientation.

The invention is of major interest for directional treads. A tire having a directional tread is a tire having properties, such as aquaplaning behavior, traction or handling, which depend on its direction of rotation; put in other words, a directional tread has a design so as to optimize the properties of the tire in the forward direction. Though it is of utmost interest to implement the teaching of the present invention in a directional tread, its benefits are not to be considered as being restricted thereto. However, if the layout of the elastomeric blocks is per se not directional, the inclusion of the sipes according to the present invention will transform the tread into a directional tread.

While certain representative embodiments have been described for the purpose of illustrating the invention, it will be apparent to those skilled in the art that various changes and modifications may be made therein without departing from the scope of the invention as defined in the claims.

## Claims

1. A winter type tire tread (11) comprising an elastomeric substance extending circumferentially about the axis of rotation of the tire (10), said tread (11) having
a pair of shoulders (12) which flank the lateral edges of a ground engageable surface;
a plurality of grooves which define a circumferentially extending pattern of elastomeric blocks (15) entering the footprint with its front side (20) and leaving the footprint through its rear side (21), each elastomeric block (15) being provided with a first (22) and a second (23) series of sipes,
the first series of sipes (22) close to said front side (20) entering the footprint (16) of the tire (10) before the second series (23) and the second series (23) close to said rear side (21) leaving the footprint (16) of the tire (10) after the first series;
at least 50% of the second series of sipes (23) forming with the rear edge (18) of the footprint an angle β of at least 50° when leaving the footprint;
characterized in that at least 70% of the first series of sipes (22) form with the front edge (17) of the footprint an angle α of at most 40° when entering the footprint.

2. A tread according to claim 1, wherein at least 70% of the first series of sipes (22) form with said front edge (17) an angle α of at most 20°, when entering the footprint (16).

3. A tread according to claim 1 or 2, wherein at least 50% of the second series of sipes (23) form with said rear edge (18) an angle β of at least 70°, when leaving the footprint (16).

4. A tread according to claim 1, wherein at least one sipe of the first series of sipes (22) intersects a side of the elastomeric blocks (15).

5. A tread according to claim 1, wherein at least one sipe of the second series of sipes (23) intersects a side of the elastomeric blocks (15).

6. A tread according to claim 1 wherein at least 50% of the second series of sipes (23) provided in blocks located in the shoulder (12) of the tire, form an angle of at least 45° with the equatorial plane (ep).

7. A tread according to claim 1 wherein at least one sipe of the first series of sipes (22) is connected with one sipe of the second series of sipes (23) by a middle portion.

8. A tread according to claim 1 wherein the middle portion is curved or angled.

9. A tread according to claim 1 wherein the middle portion is wave shaped or zig-zag shaped.

10. A tread according to claim 1 wherein said plurality of grooves defines a directional pattern of elastomeric blocks.

## Patentansprüche

1. Winterreifenprofil (11), umfassend eine elastomere Substanz, welche sich umfänglich um die Rotationsachse des Reifens (10) erstreckt, wobei das Profil (11) umfaßt:
ein Paar von Schultern (12), welche die lateralen Kanten einer bodeneingreifbaren Oberfläche flankieren;
eine Vielzahl von Rillen, welche ein sich umfänglich erstreckendes Muster von elastomeren Klötzen (15) definieren, welche den Abdruck mit ihrer Vorderseite (20) erreichen und den Abdruck durch ihre Rückseite (21) verlassen, wobei jeder elastomere Klotz (15) mit einer ersten (22) und einer zweiten (23) Serie von Feinschnitten versehen ist,
wobei die erste Serie von Feinschnitten (22) nahe an der Vorderseite (20) den Abdruck (16) des Reifens (10 )vor der zweiten Serie (23) erreicht und die zweite Serie (23) nahe an dem hinteren Ende (21) den Abdruck (16) des Reifens (10) nach der ersten Serie verläßt,
wobei zumindest 50 % der zweiten Serie von Feinschnitten (23) beim Verlassen des Abdruckes mit der hinteren Kante (18) des Abdruckes einen Winkel β von zumindest 50° bilden;
dadurch gekennzeichnet, daß zumindest 70 % der ersten Serie der Feinschnitte (22) beim Erreichen des Abdruckes mit der vorderen Kante (17) des Abdruckes einen Winkel α bilden von maximal 40°.

2. Profil gemäß Anspruch 1, worin zumindest 70 % der ersten Serie der Feinschnitte (22) beim Erreichen des Abdruckes (16) mit der vorderen Kante (17) einen Winkel α bilden von maximal 20°.

3. Profil gemäß Anspruch 1 oder 2, worin zumindest 50 % der zweiten Serie der Feinschnitte (23) beim Verlassen des Abdruckes (16) mit der hinteren Kante (18) einen Winkel β bilden von zumindest 70°.

4. Profil gemäß Anspruch 1, worin zumindest ein Feinschnitt der ersten Serie der Feinschnitte (22) eine Seite der elastomeren Klötze (15) schneidet.

5. Profil gemäß Anspruch 1, worin zumindest ein Feinschnitt der zweiten Serie von Feinschnitten (23) eine Seite der elastomeren Klötze (15) schneidet.

6. Profil gemäß Anspruch 1, worin zumindest 50 % der zweiten Serie der Feinschnitte (23), die in Klötzen vorgesehen sind, welche in der Schulter (12) des Reifens angeordnet sind mit der Äquatorialebene (EP) einen Winkel von zumindest 45° bilden.

7. Profil gemäß Anspruch 1, worin zumindest ein Feinschnitt der ersten Serie der Feinschnitte (22) durch einen Mittelabschnitt mit einem Feinschnitt der zweiten Serie der Feinschnitte (23) verbunden ist.

8. Profil gemäß Anspruch 1, worin der Mittelabschnitt gebogen oder gewinkelt ist.

9. Profil gemäß Anspruch 1, worin der Mittelabschnitt wellenförmig oder zickzackförmig ist.

10. Profil gemäß Anspruch 1, worin die Vielzahl von Rillen ein Richtmuster von elastomeren Klötzen definiert.

## Revendications

1. Bande de roulement (11) pour un bandage pneumatique de type pour l'hiver, comprenant une substance élastomère s'étendant en direction circonférentielle autour de l'axe de rotation du bandage pneumatique (10), ladite bande de roulement (11) comportant
une paire d'épaulements (12) qui flanquent les bords latéraux d'une surface apte à venir se mettre en contact avec le sol;
plusieurs rainures qui définissent un modèle de blocs élastomères (15) s'étendant en direction circonférentielle, qui pénètrent dans l'empreinte avec leur côté avant (20) et qui quittent l'empreinte avec leur côté arrière (21), chaque bloc élastomère (15) étant muni de première et seconde séries de lamelles (22, 23),
la première série de lamelles (22) proche dudit côté avant (20) pénétrant dans l'empreinte (16) du bandage pneumatique (10) avant la seconde série (23), et la seconde série (23) proche dudit côté arrière (21) quittant l'empreinte (16) du bandage pneumatique (10) après la première série;
au moins 50% des lamelles de la seconde série de lamelles (23) formant, avec le bord arrière (18) de l'empreinte, un angle β d'au moins 50° lorsqu'elles quittent l'empreinte;
caractérisé en ce qu'au moins 70% des lamelles de la première série de lamelles (22) forment, avec le bord avant (17) de l'empreinte, un angle α maximal de 40° lorsqu'elles pénètrent dans l'empreinte.

2. Bande de roulement selon la revendication 1, dans laquelle au moins 70% des lamelles de la première série de lamelles (22) forment, avec ledit bord avant (17), un angle α maximal de 20° lorsqu'elles pénètrent dans l'empreinte (16).

3. Bande de roulement selon la revendication 1 ou 2, dans laquelle au moins 50% des lamelles de la seconde série de lamelles (23) forment, avec ledit bord arrière (18), un angle β d'au moins 70° lorsqu'elles quittent l'empreinte (16).

4. Bande de roulement selon la revendication 1, dans laquelle au moins une lamelle de la première série de lamelles (22) coupe un côté des blocs élastomères (15).

5. Bande de roulement selon la revendication 1, dans laquelle au moins une lamelle de la seconde série de lamelles (23) coupe un côté des blocs élastomères (15).

6. Bande de roulement selon la revendication 1, dans laquelle au moins 50% des lamelles de la seconde série de lamelles (23) pratiquées dans des blocs disposés dans l'épaulement (12) du bandage pneumatique forment un angle d'au moins 45° avec le plan équatorial (EP).

7. Bande de roulement selon la revendication 1, dans laquelle au moins une lamelle de la première série de lamelles (22) est reliée à une lamelle de la seconde série de lamelles (23) par une portion médiane.

8. Bande de roulement selon la revendication 1, dans laquelle la portion médiane est courbe ou angulaire.

9. Bande de roulement selon la revendication 1, dans laquelle la portion médiane est de forme ondulée ou en zigzag.

10. Bande de roulement selon la revendication 1, dans laquelle lesdites plusieurs rainures définissent un modèle directionnel de blocs élastomères.
